(19) Europäisches Patentamt
European Patent Office
Office européen des brevets

(11) **EP 2 375 262 B1**

(12) **FASCICULE DE BREVET EUROPEEN**

(45) Date de publication et mention
de la délivrance du brevet:
**22.08.2012 Bulletin 2012/34**

(51) Int Cl.:
***G01S 5/02*** *(2010.01)*

(21) Numéro de dépôt: **11159063.4**

(22) Date de dépôt: **21.03.2011**

(54) **Procédé de détermination des positions d'objets, programme d'ordinateur associé et installation de contrôle**

Verfahren zur Positionbestimmung von Gegenständen, entsprechendes Computerprogramm und entsprechende Kontrollanlage

Method for determining the positions of objects, related computer program and control facility

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2010 FR 1052301**

(43) Date de publication de la demande:
**12.10.2011 Bulletin 2011/41**

(73) Titulaires:
• **Commissariat à l'Énergie Atomique et aux Énergies Alternatives**
**75015 Paris (FR)**
• **Institut Polytechnique de Grenoble**
**38031 Grenoble Cedex 1 (FR)**

(72) Inventeurs:
• **Carmona, Mikaël**
**38570 Tencin (FR)**

• **Michel, Olivier**
**38000 Grenoble (FR)**

(74) Mandataire: **Bonnet, Michel**
**Cabinet Bonnet**
**93, Rue Réaumur - Boîte 10**
**75002 Paris (FR)**

(56) Documents cités:
GB-A- 2 460 406          US-A1- 2005 135 319
US-A1- 2007 241 964

• NICULESCU D ET AL: "Ad hoc positioning system (APS) using AOA", IEEE INFOCOM 2003. TWENTY-SECOND ANNUAL JOINT CONFERENCE OF THE IEEE COMPUTER AND COMMUNICATIONS SOCIETIES (IEEE CAT. NO. 03CH37428) IEEE PISCATAWAY, NJ, USA,, vol. 3, 1 janvier 2003 (2003-01-01), pages 1734-1743VOL, XP002485169,

## Description

La présente invention concerne un procédé de détermination de paramètres de disposition absolue d'objets, un programme d'ordinateur associé et une installation de contrôle.

Dans la description et les revendications qui vont suivre, la terminologie suivante sera utilisée.

La « disposition relative » de deux objets est la configuration géométrique des deux objets l'un par rapport à l'autre.

Un « paramètre de disposition relative » est une information permettant de caractériser au moins en partie la disposition relative des deux objets. Il peut s'agir en particulier de la distance (euclidienne) entre les deux objets ou de l'orientation relative des deux objets.

La « disposition absolue » d'un objet est la configuration géométrique de l'objet par rapport à une référence (ou repère de référence).

Un « paramètre de disposition absolue » est une information permettant de caractériser, au moins en partie, la disposition absolue de l'objet. Il peut d'agir en particulier de la position de l'objet par rapport à la référence ou de l'orientation de l'objet par rapport à la référence.

Le document GB 2 460 406 A décrit un procédé de détermination de la position absolue d'objets à partir des distances entre objets voisins et ses fiabilités associées.

Un autre procédé de détermination d'un paramètre de disposition absolue d'objets a été proposé à la conférence donnée du 12 au 14 août 2009 à la Northern Illinois University, dans l'intervention intitulée « Explicit Sensor Network Localization using Semidefinite Programming and Clique Réductions », de Nathan Krislock and Henry Wolkowicz.

Plus précisément, les objets sont des capteurs et le paramètre de disposition absolue est la position de ces capteurs. Ces positions sont déterminées à partir de la connaissance de la position absolue de certains de ces capteurs, dits capteurs de référence, et de paramètres de disposition relative entre capteurs, à savoir la distance les séparant deux à deux, ces distances étant regroupées dans une matrice de distances.

Ce procédé propose de compléter la matrice de distances en tirant profit du chevauchement de blocs complets (c'est-à-dire dont toutes les distances entre capteurs sont connues) de cette matrice de distances, ce qui revient à considérer le chevauchement de sous-ensembles complets du réseau de capteurs. Une fois la matrice de distances complétée, la position de chaque capteur est déterminée. Ce procédé permet une résolution explicite du problème.

Cependant, ce procédé ne s'applique que dans le cas où la distance entre chaque paire de capteurs séparés d'une distance inférieure à un paramètre prédéterminé R (appelé paramètre radio) est connue. En outre, il n'est applicable qu'aux données non bruitées (positions des capteurs de référence et distances de départ connues de façon exacte).

Il peut ainsi être souhaité de prévoir un procédé de détermination d'un paramètre de disposition absolue d'objets qui permette de s'affranchir d'au moins une partie des problèmes et contraintes précités.

L'invention a donc pour objet un procédé de détermination d'un paramètre de disposition absolue d'objets, comportant les étapes suivantes :

- l'obtention de paramètres de disposition relative, chacun entre deux objets d'un ensemble d'objets,
- l'association, à chaque paramètre de disposition relative reçu, d'une valeur, appelée fiabilité du paramètre de disposition relative,

la boucle d'étapes suivante, exécutée au moins une fois :

- la sélection d'un sous-ensemble d'objets, appelé sous-ensemble de travail, en fonction des fiabilités des paramètres de disposition relative des objets de l'ensemble,
- la détermination de nouveaux paramètres de disposition relative, chacun entre un objet appartenant au sous-ensemble de travail et un objet extérieur au sous-ensemble de travail,
- l'association, à chaque nouveau paramètre de disposition relative déterminé, d'une fiabilité calculée à partir des fiabilités des paramètres de disposition relative des objets du sous-ensemble de travail,

ainsi que l'étape suivante :

- la fourniture de paramètres de disposition absolue, chacun d'un objet de l'ensemble, ces paramètres étant obtenus à partir des nouveaux paramètres de disposition relative déterminés.

Ainsi, grâce à l'introduction de la notion de fiabilité, l'invention permet, d'une part, de favoriser certains paramètres de disposition relative par rapport aux autres en utilisant les fiabilités dans la sélection du sous-ensemble de travail, et, d'autre part, de tenir compte de la propagation des erreurs d'une itération à l'autre en déterminant les fiabilités des nouveaux paramètres déterminés en fonction des fiabilités des paramètres précédemment déterminés.

En particulier, l'invention permet de favoriser les données jugées les plus fiables pour trouver de nouveaux paramètres de disposition relative et de réduire l'influence des paramètres déterminés après de nombreuses itérations en choisissant judicieusement la manière de calculer la fiabilité des nouveaux paramètres.

De façon optionnelle, la sélection du sous-ensemble de travail comporte:

- la détermination de plusieurs sous-ensembles, appelés sous-ensembles de travail possibles, et le calcul, pour chaque sous-ensemble de travail possible, d'une valeur, appelée fiabilité de ce sous-ensemble de travail possible, à partir des fiabilités des paramètres de disposition relative des objets de ce sous-ensemble de travail possible, et

- la sélection, en tant que sous-ensemble de travail, du sous-ensemble de travail possible présentant la fiabilité la plus élevée.

De façon optionnelle également, la boucle d'étapes comporte en outre la détermination du paramètre de disposition absolue de chaque objet du sous-ensemble de travail.

De façon optionnelle également, la sélection du sous-ensemble de travail est en outre réalisée en imposant que tous les paramètres de disposition relative des objets du sous-ensemble de travail soient connus.

De façon optionnelle également, les objets dont le paramètre de disposition absolue est connu étant appelés objets de référence, la détermination du paramètre de disposition absolue de chaque objet du sous-ensemble de travail est réalisée à partir des paramètres de disposition absolue des objets de référence du sous-ensemble de travail et des paramètres de disposition relative des objets du sous-ensemble de travail.

De façon optionnelle également, les objets dont le paramètre de disposition absolue est connu étant appelés objets de référence, les objets du sous-ensemble de travail et les objets extérieurs au sous-ensemble de travail entre lesquels de nouveaux paramètres de disposition relative sont déterminés, sont des objets de référence.

De façon optionnelle également, la fiabilité associée à un nouveau paramètre de disposition relative entre un objet du sous-ensemble de travail et un objet extérieur au sous-ensemble de travail est déterminée selon une règle prédéterminée imposant qu'elle soit strictement inférieure à la moyenne des fiabilités des paramètres de disposition relative des objets du sous-ensemble de travail.

De façon optionnelle également, le paramètre de disposition relative entre deux objets est la distance entre ces deux objets, et le paramètre de disposition absolue d'un objet est la position de cet objet par rapport à une référence.

De façon optionnelle également, le paramètre de disposition relative entre deux objets est l'orientation relative entre ces deux objets, et le paramètre de disposition absolue d'un objet est l'orientation absolue de cet objet par rapport à une référence.

De façon optionnelle également, la boucle d'étapes comporte en outre:

- la détermination d'un vecteur propre d'une matrice regroupant les orientations relatives des objets du sous-ensemble de travail, toutes les composantes du vecteur propre étant unitaires,
- la détermination de l'orientation absolue de chaque objet du sous-ensemble de travail, à partir du vecteur propre et de l'orientation absolue d'un objet de référence du sous-ensemble de travail.

L'invention a également pour objet un programme d'ordinateur téléchargeable depuis un réseau de communication et/ou enregistré sur un support lisible par ordinateur et/ou exécutable par un processeur, comprenant des instructions pour l'exécution des étapes d'un procédé de détermination de paramètres de disposition absolue d'objets selon l'invention, lorsque ledit programme est exécuté sur un ordinateur.

L'invention a également pour objet une installation de contrôle, comportant :

- un ensemble de capteurs, chaque capteur étant conçu pour déterminer un paramètre de disposition relative par rapport à au moins un autre capteur de l'ensemble, et pour transmettre ce paramètre,
- un dispositif de traitement conçu pour recevoir les paramètres transmis par les capteurs et pour mettre en oeuvre un procédé de détermination de paramètres de disposition absolue des capteurs selon l'invention.

L'invention sera mieux comprise à l'aide de la description qui va suivre, donnée uniquement à titre d'exemple et faite en se référant aux dessins annexés dans lesquels :

- la figure 1 est un schéma représentant un ouvrage de génie civil comportant une installation de contrôle selon un mode de réalisation de l'invention, et
- la figure 2 illustre les étapes successives d'un procédé de contrôle d'une structure de génie civil de l'ouvrage de génie civil de la figure 1.

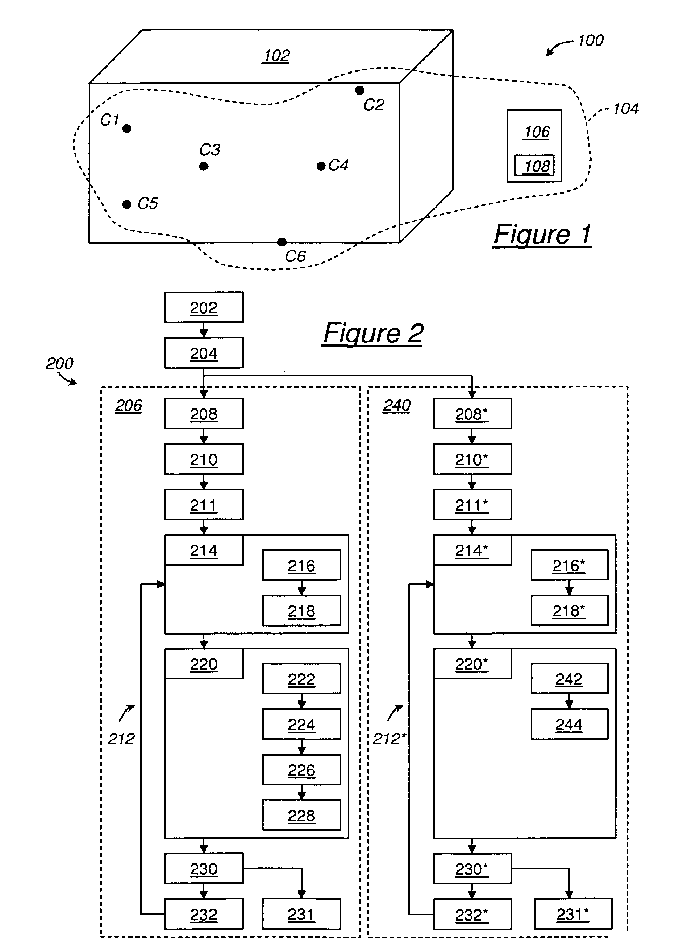

L'ouvrage de génie civil 100 représenté sur la figure 1 comporte une structure de génie civile 102 et une installation 104 de contrôle de la structure de génie civil 102, destinée à surveiller l'état de la structure de génie civil 102 et en particulier ses déformations géométriques.

A cet effet, l'installation 104 comporte tout d'abord un ensemble de capteurs - six dans l'exemple illustré, référencés C1, C2, C3, C4, C5, C6 - fixés à la structure de génie civil 102, par exemple en étant enfouis dans cette dernière. Chaque capteur est conçu pour déterminer des caractéristiques de disposition relative par rapport aux autres capteurs de l'ensemble, et en particulier sa distance et son orientation à l'aide de moyens classiques. Chaque capteur est en outre conçu pour transmettre, avec ou sans fil, les caractéristiques de disposition relative déterminées à un dispositif de traitement 106 de l'installation 104.

Ce dispositif de traitement 106 est connecté à chacun des capteurs par une connexion filaire ou bien sans fil, suivant le mode de transmission des capteurs.

Le dispositif de traitement 106 est conçu pour déterminer la position et l'orientation absolue d'au moins une partie des capteurs, si possible tous. Dans l'exemple décrit, le dispositif 106 est un ordinateur dans lequel est installé un programme d'ordinateur 108 comportant des instructions pour l'exécution des étapes d'un procédé de détermination de la position absolue des capteurs et d'un procédé de détermination de l'orientation absolue des capteurs.

En référence à la figure 2, un procédé 200 de contrôle de la structure de génie civil 102, mis en oeuvre par l'installation 104, comporte les étapes suivantes.

Au cours d'une étape 202, chacun des capteurs C1, C2, C3, C4, C5, C6 cherche à déterminer sa distance par rapport aux autres capteurs. Généralement, la distance peut être déterminée tant que les deux capteurs ne sont pas trop éloignés l'un de l'autre et qu'aucun obstacle opaque (au sens de la visibilité des capteurs) ne se trouve entre eux. Chaque capteur détermine ainsi aucune, une seul ou bien plusieurs distances avec d'autres capteurs.

Au cours d'une étape 204, les capteurs C1, C2, C3, C4, C5, C6 transmettent les distances déterminées au dispositif de traitement 106.

Ensuite, le dispositif de traitement 106, exécutant le programme d'ordinateur 108, met en oeuvre un procédé 206 de détermination des positions d'au moins une partie des capteurs C1, C2, C3, C4, C5, C6 qui comporte les étapes détaillées ci-dessous.

Au cours d'une étape 208, le dispositif de traitement 106 reçoit des positions (absolues), chacune d'un capteur de l'ensemble. Les capteurs dont la position est connue sont appelés par la suite capteurs de référence.

Au cours d'une étape 210, le dispositif de traitement 106 obtient des distances entre capteurs provenant de la réception des distances transmises par les capteurs C1, C2, C3, C4, C5, C6, ainsi que du calcul des distances entre les capteurs de référence. Chaque distance reçue est donc prise entre deux capteurs respectifs de l'ensemble.

Les distances sont enregistrées dans une matrice de distances $D$, avec la distance entre le capteur Ci et le capteur Cj enregistrée dans l'emplacement (i, j) de la matrice de distances $D$. La matrice de distances $D$ est ainsi une matrice symétrique. En outre, généralement, certaines distances entre capteurs ne sont pas connues, de sorte que certains emplacements de la matrice de distances $D$ sont vides. La matrice de distances $D$ est ainsi mathématiquement dite « incomplète ». Enfin, les distances reçues par le dispositif de traitement 106 et enregistrées dans la matrice de distances $D$ présentent généralement une erreur par rapport aux distances réelles entre les capteurs, de sorte que la matrice de distances $D$ est dite « bruitée ».

Au cours d'une étape 211, le dispositif de traitement 106 associe, à chaque distance reçue, une valeur appelée fiabilité de distance. La fiabilité est par exemple exprimée sous la forme d'un nombre, en particulier entre « 0 » et « 1 » ou en pourcentage.

La fiabilité d'une distance mesurée par les capteurs est de préférence déterminée à partir de la marge d'erreur intrinsèque de chaque capteur. La fiabilité d'une distance calculée à partir des positions de capteurs de référence est de préférence déterminée à partir de la marge d'erreur intrinsèque du dispositif de mesure de la position de ces capteurs. Dans les deux cas, la marge d'erreur est obtenue par exemple par modélisation et calcul et/ou de manière empirique au moyen de tests, à partir des capteurs ou du dispositif de mesure de position. Généralement, la fiabilité associée aux distances entre capteurs de référence est plus élevée que la fiabilité des distances mesurées par les capteurs eux-mêmes, par exemple 95% ou plus pour les premières, contre moins de 95% pour les secondes.

Les fiabilités de distance sont enregistrées dans une matrice $F$, avec la fiabilité de distance entre le capteur Ci et le capteur Cj enregistrée dans l'emplacement (i, j) de la matrice $F$. Cette matrice F est ainsi également symétrique et incomplète.

Le dispositif de traitement 106 exécute alors au moins une fois la boucle d'étapes 212 suivante.

Au cours d'une étape 214, le dispositif de traitement 106 sélectionne un sous-ensemble de capteurs, appelé sous-ensemble de travail, en fonction des fiabilités de distance entre les capteurs de l'ensemble. Dans l'exemple décrit, le sous-ensemble de travail est déterminé de manière que toutes les distances entre les capteurs qu'il regroupe soient connues. En outre, le sous-ensemble de travail est déterminé de manière qu'il comporte au moins quatre capteurs de référence non coplanaires lorsque la détermination est réalisée en trois dimensions, ou bien au moins trois capteurs de référence non alignés lorsque la détermination est réalisée en deux dimensions.

Les distances entre les capteurs du sous-ensemble de travail sont enregistrées dans une matrice de distances $\hat{D}$, de la même manière que pour la matrice de distances $D$. Comme toutes les distances entre les capteurs du sous-ensemble de travail sont connues, la matrice de distances $\hat{D}$ est mathématiquement dite « complète ». Par souci de simplification, on utilisera la notation $\hat{D}$ à la fois pour le sous-ensemble de travail et pour la matrice de distances associée.

Dans l'exemple décrit, pour déterminer le sous-ensemble de travail, au cours d'une étape 216, le dispositif de traitement 106 détermine plusieurs sous-ensembles de travail possibles - complets et comportant suivant le cas au moins trois ou quatre capteurs de référence - et calcule, pour chacun d'eux une valeur, appelée fiabilité du sous-ensemble, à partir des fiabilités des distances entre les objets du sous-ensemble. Dans l'exemple décrit, la fiabilité du sous-ensemble est égale à la moyenne des fiabilités des distances entre les capteurs du sous-ensemble. De préférence, la moyenne utilisée est la moyenne arithmétique.

Selon un mode de réalisation possible, au cours de l'étape 216, le dispositif de traitement 106 détermine un sous-ensemble de travail possible pour chacun d'une partie des capteurs de l'ensemble, par exemple pour chaque capteur de l'ensemble. Pour un capteur donné Ci, ce sous-ensemble de travail possible peut être déterminé de la manière suivante. Le dispositif de traitement 106 crée tout d'abord un sous-ensemble temporaire comprenant uniquement le capteur Ci. Le dispositif de traitement 106 détermine ensuite un ou plusieurs capteurs extérieurs au sous-ensemble temporaire dont la distance avec chacun des capteurs du sous-ensemble temporaire est connue, à au moins quatre capteurs de référence soit qui appartiennent au sous-ensemble temporaire (trois capteurs de référence pour une localisation dans le plan) soit dont la distance avec chacun des capteurs du sous-ensemble temporaire est connue. Parmi ces capteurs extérieurs déterminés, le dispositif de traitement 106 sélectionne celui permettant, au sous-ensemble constitué du sous-ensemble temporaire augmenté de ce capteur, de présenter la fiabilité la plus élevée. Le capteur ainsi sélectionné est alors ajouté au sous-ensemble temporaire. Les trois dernières étapes (détermination de capteurs extérieurs, sélection d'un de ces capteurs et ajout du capteur sélectionné au sous-ensemble temporaire) sont répétées tant qu'il est possible de trouver un capteur à ajouter au sous-ensemble temporaire. Lorsque cela n'est plus possible, le sous-ensemble temporaire devient le sous-ensemble de travail possible pour le capteur Ci.

Une autre manière de faire, envisageable en pratique seulement pour les ensembles comportant un nombre limité de capteurs, pourrait être de déterminer tous les sous-ensembles de travail théoriquement possibles, par une des méthodes connues en soi.

Ensuite, au cours d'une étape 218, le dispositif de traitement 106 sélectionne, en tant que sous-ensemble de travail, le sous-ensemble de travail possible présentant la fiabilité la plus élevée. Si plusieurs sous-ensembles de travail possibles présentent la même fiabilité, le dispositif de traitement 106 sélectionne par exemple celui comportant le plus de capteurs de référence. Si plusieurs sous-ensembles de travail possibles comportent le même nombre de capteurs de référence, le dispositif de traitement 106 sélectionne celui comportant deux capteurs séparés d'une distance présentant la fiabilité la plus élevée. En cas d'égalité, le dispositif de traitement 106 sélectionne alors arbitrairement l'un des sous-ensembles de travail possibles.

En toute rigueur, la recherche du sous-ensemble présentant la fiabilité la plus élevée est un problème qui relève de la théorie des graphes et qui est classé NP-difficile. Ainsi, il n'est pas possible de trouver en un temps raisonnable tous les sous-ensembles de travail possibles, ni de vérifier qu'un sous-ensemble de travail possible présente une fiabilité maximale, sauf dans le cas évoqué précédemment d'un nombre limité de capteurs, de sorte que tous les sous-ensembles de travail théoriquement possibles ne sont pas obligatoirement déterminés à l'étape 216. En pratique, cette étape peut donc être implémentée de façon sous optimale sans que cela ne nuise à l'ensemble du procédé.

Au cours d'une étape 220, le dispositif de traitement 106 détermine la position absolue de chaque capteur du sous-ensemble de travail à partir des positions des capteurs de référence du sous-ensemble de travail et des distances entre les capteurs du sous-ensemble de travail. Ainsi, tous les capteurs du sous-ensemble de travail deviennent des capteurs de référence.

Dans l'exemple décrit, la détermination de la position de chaque capteur du sous-ensemble de travail comporte les étapes 222 à 228 suivantes.

Au cours d'une étape 222, le dispositif de traitement 106 calcule une matrice $G$, de la manière suivante :

$$G = -\frac{1}{2} H_N \hat{D} H_N,$$

avec $H_N = I_N - \frac{J_N}{N}$, où $N$ est le nombre de capteurs dans le sous-ensemble de travail $\hat{D}$, $I_N$ est la matrice identité d'ordre $N$ et $J_N$ est la matrice carrée d'ordre $N$ ne contenant que des « 1 ».

Au cours d'une étape 224, le dispositif de traitement 106 détermine, dans le cas d'une détermination de positions de capteurs dans l'espace, d'une part, les trois plus grandes valeurs propres en valeur absolue de la matrice $G$ et les enregistre dans une matrice diagonale A et, d'autre part, les trois vecteurs propres associés et les enregistre dans une matrice $P$. Dans le cas d'une détermination de positions de capteurs dans le plan, seuls les deux plus grandes valeurs propres et vecteurs associés sont déterminés. Cette détermination est par exemple réalisée à l'aide d'algorithmes de décomposition en valeurs singulières.

Au cours d'une étape 226, le dispositif de traitement 106 calcule une matrice $Y$, de la manière suivante :

$$Y = P\Lambda^{1/2}.$$

On montre que, géométriquement, la matrice $Y$ contient la position de chacun des capteurs du sous-ensemble de travail, mais dans un repère qui n'est pas le repère de référence.

Au cours d'une étape 228, le dispositif de traitement 106 détermine la position de chacun des capteurs du sous-ensemble de travail à partir de la matrice $Y$ et des positions des capteurs de référence.

Au cours d'une étape 230, le dispositif de traitement 106 détermine de nouvelles distances, chacune entre un capteur de référence appartenant au sous-ensemble de travail et un capteur de référence extérieur au sous-ensemble de travail, et complète la matrice $D$ avec les nouvelles distances trouvées. Cette détermination est facilement réalisée grâce à la connaissance de la position de chaque capteur de référence.

Ensuite, au cours d'une étape 232, le dispositif de traitement 106 associe, à chaque nouvelle distance déterminée à l'étape 230, une fiabilité calculée à partir des fiabilités des distances entre les capteurs du sous-ensemble de travail. Dans l'exemple décrit, la fiabilité de chaque nouvelle distance est égale à la moitié de la fiabilité du sous-ensemble de travail, c'est-à-dire à la moitié de la moyenne des fiabilités de distance des capteurs du sous-ensemble de travail. On remarquera que la fiabilité associée à une nouvelle distance est strictement inférieure à la moyenne des fiabilités de distance des capteurs du sous-ensemble de travail. Ceci permet de s'assurer que la fiabilité des nouvelles distances déterminées diminue avec le nombre d'exécutions de la boucle d'étapes 212. Ainsi, à chaque exécution de la boucle d'étapes 212, il devient plus difficile de trouver un sous-ensemble de travail dont la fiabilité est la plus élevée et qui n'a pas été déjà trouvé lors d'une précédente exécution de la boucle d'étapes 212. Ainsi, les distances déterminées lors des premières itérations de la boucle 212 ont un poids plus important que celles déterminées dans les itérations ultérieures. Cela favorise la sélection en tant que sous-ensemble de travail, d'un sous-ensemble comportant des capteurs séparés par des distances déterminées dans les premières itérations, par rapport aux sous-ensembles comportant des capteurs séparés par des distances déterminées dans des itérations ultérieures. Cette manière de faire diminue la propagation d'erreur dans la succession des exécutions de la boucle d'étapes 212.

Le dispositif de traitement 106 commence alors une nouvelle exécution de la boucle d'étapes 212.

On notera toutefois que si aucune nouvelle distance ne peut être déterminée à l'étape 230, le dispositif de traitement 106 peut arrêter l'exécution de la boucle d'étapes 212 et fournir, au cours d'une étape 231, les positions des capteurs de référence de l'ensemble de capteurs et en particulier les distances déterminées à l'étape 220.

Le dispositif de traitement 106, exécutant le programme d'ordinateur 108, met également en oeuvre un procédé 240 de détermination des orientations absolues des capteurs C1, C2, C3, C4, C5, C6. Ce procédé 240 est similaire au procédé 206, si ce n'est qu'il s'applique à des orientations relatives et absolues, plutôt qu'à des distances et des positions. Pour refléter ce changement, les étapes dont le déroulement reste identique à celui du procédé 206 seront numérotées de la même manière, mais avec un astérisque indiquant que les données traitées ne sont pas les mêmes.

Ainsi, la position d'un capteur est remplacée par l'orientation absolue du capteur. Dans l'exemple décrit, cette orientation absolue est représentée par un quaternion.

La distance entre deux capteurs est remplacée par l'orientation relative entre deux capteurs. Dans l'exemple décrit, cette orientation relative est également représentée par un quaternion.

La matrice de distances $D$ de l'ensemble de capteurs est remplacée par une matrice d'orientations relatives $O$, dans laquelle l'orientation relative entre le capteur Ci et le capteur Cj est enregistrée dans l'emplacement (i, j) de la matrice d'orientations relatives $O$. Dans l'exemple décrit, la matrice $O$ est donc une matrice de quaternions symétrique.

De même, la matrice de distances $\hat{D}$ du sous-ensemble de travail est remplacée par une matrice d'orientations relatives $\hat{O}$ du sous-ensemble de travail et les fiabilités de distance sont remplacées par des fiabilités d'orientation relative.

En outre, le sous-ensemble de travail comporte au moins un capteur de référence (c'est-à-dire, dans le cadre du procédé 240, un capteur dont l'orientation absolue est connue), au lieu d'au moins trois ou quatre capteurs de référence pour le procédé 206.

En outre, la détermination 220* de l'orientation absolue de chaque capteur du sous-ensemble de travail comporte les étapes 242 et 244 suivantes, à la place des étapes 222 à 228.

Au cours d'une étape 242, le dispositif de traitement 106 détermine, d'une part, la plus grande valeur propre en valeur absolue de la matrice d'orientations relatives $\hat{O}$ du sous-ensemble de travail et, d'autre part, le vecteur propre associé, noté $V$, composé uniquement de quaternions unitaires.

Au cours d'une étape 244, le dispositif de traitement 106 détermine l'orientation absolue de chacun des capteurs du sous-ensemble de travail à partir de du vecteur propre V et de l'orientation absolue du capteur de référence du sous-ensemble de travail.

Dans l'exemple décrit, cette détermination est réalisée par le calcul suivant:

$$\hat{Q} = V \times (\overline{v}_i q_i)\,,$$

où $\hat{Q} = \begin{pmatrix} q_1 \\ \vdots \\ q_k \end{pmatrix}$ est le vecteur des $k$ quaternions représentant les orientations absolues des $k$ capteurs du sous-ensemble de travail, $q_i$ est le quaternion représentant l'orientation absolue du capteur de référence Ci du sous-ensemble de travail et $\overline{v}_i$ est le conjugué de la composante du vecteur propre $V$ correspondant au capteur de référence Ci.

Le procédé précédemment décrit a été testé sur des réseaux de dix capteurs comprenant quatre capteurs de référence, pour déterminer la position des capteurs, en faisant varier l'erreur sur les positions des capteurs de référence et les distances déterminées au départ entre capteurs. La norme infinie (plus grande distance entre les valeurs théoriques et les valeurs déterminées) a été utilisée pour évaluer l'erreur sur les positions déterminées. Les résultats ont montré que ce procédé était robuste.

On notera que l'invention n'est pas limitée au mode de réalisation décrit précédemment. Il apparaîtra en effet à l'homme de l'art que diverses modifications peuvent être apportées aux modes de réalisation décrits ci-dessus, à la lumière de l'enseignement qui vient de lui être divulgué.

En particulier, l'installation de contrôle pourrait être utilisée dans d'autres domaines que le contrôle de structures de génie civil, par exemple pour suivre le mouvement d'objets (véhicules, marchandises, personnes, animaux, etc.) auxquels seraient fixés les capteurs.

En outre, les paramètres de disposition absolue des objets pourraient être déterminés après les exécutions successives de la boucle d'étapes, au lieu d'être déterminés petit à petit à chaque itération de cette boucle d'étapes. Par exemple, l'invention pourrait être avantageusement appliquée au procédé décrit dans la conférence citée au début de la présente description pour l'améliorer. Des fiabilités seraient associées aux distances et la détermination des sous-ensembles complets se chevauchant tiendrait compte de ces fiabilités. En outre, les nouvelles distances déterminées à chaque itération se verraient associées de nouvelles fiabilités comme le prévoit l'invention. Grâce à l'invention, il devrait ainsi être possible de se passer de la contrainte selon laquelle la distance entre chaque paire de capteurs séparés d'une distance inférieure à un paramètre prédéterminé R (appelé paramètre radio) est connue.

En outre, il pourrait être possible de sélectionner un sous-ensemble de travail incomplet. Dans ce cas, l'étape 220 de détermination des paramètres de disposition absolue des objets du sous-ensemble de travail devrait simplement être adaptée.

En outre, il est possible de ne pas utiliser au départ d'objets de référence, c'est-à-dire qu'il est possible de ne pas avoir d'étape 208. Dans ce cas, les paramètres de disposition absolue seraient déterminés par rapport à un repère attaché à l'ensemble d'objets, par exemple l'un des objets choisi arbitrairement comme référence. Cette variante peut être intéressante lorsqu'on s'intéresse aux positions des objets les uns par rapport aux autres, et non par rapport à une référence fixe.

Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Procédé de détermination de paramètres de disposition absolue d'objets à partir de paramètres de disposition relative fournis par des capteurs, mis en oeuvre par un dispositif de traitement (106), comportant les étapes suivantes :

- l'obtention (210 ; 210*) de paramètres de disposition relative, chacun entre deux objets d'un ensemble d'objets, les paramètres de disposition relative ayant été déterminés et transmis au dispositif de traitement (106) par les capteurs,
- l'association (211 ; 211*), à chaque paramètre de disposition relative reçu, d'une valeur, appelée fiabilité du paramètre de disposition relative,

**caractérisé en ce qu'**il comporte en outre la boucle d'étapes (212 ; 212*) suivante, exécutée au moins une fois :

- la sélection (214 ; 214*) d'un sous-ensemble d'objets, appelé sous-ensemble de travail, en fonction des fiabilités des paramètres de disposition relative des objets de l'ensemble,
- la détermination (230 ; 230*) de nouveaux paramètres de disposition relative, chacun entre un objet appartenant au sous-ensemble de travail et un objet extérieur au sous-ensemble de travail,
- l'association (232 ; 232*), à chaque nouveau paramètre de disposition relative déterminé, d'une fiabilité calculée à partir des fiabilités des paramètres de disposition relative des objets du sous-ensemble de travail,

ainsi que l'étape suivante :

- la fourniture (231) de paramètres de disposition absolue, chacun d'un objet de l'ensemble, ces paramètres étant obtenus à partir des nouveaux paramètres de disposition relative déterminés.

2. Procédé selon la revendication 1, dans lequel la sélection (214) du sous-ensemble de travail comporte :

- la détermination (216 ; 216*) de plusieurs sous-ensembles, appelés sous-ensembles de travail possibles, et le calcul, pour chaque sous-ensemble de travail possible, d'une valeur, appelée fiabilité de ce sous-ensemble de travail possible, à partir des fiabilités des paramètres de disposition relative des objets de ce sous-ensemble de travail possible, et

- la sélection (218 ; 218*), en tant que sous-ensemble de travail, du sous-ensemble de travail possible présentant la fiabilité la plus élevée.

**3.** Procédé selon la revendication 1 ou 2, dans lequel la boucle d'étapes (212 ; 212*) comporte en outre la détermination (220 ; 220*) du paramètre de disposition absolue de chaque objet du sous-ensemble de travail.

**4.** Procédé selon l'une quelconque des revendications 1 à 3, dans lequel la sélection du sous-ensemble de travail est en outre réalisée en imposant que tous les paramètres de disposition relative des objets du sous-ensemble de travail soient connus.

**5.** Procédé selon les revendications 3 et 4, dans lequel, les objets dont le paramètre de disposition absolue est connu étant appelés objets de référence, la détermination (220 ; 220*) du paramètre de disposition absolue de chaque objet du sous-ensemble de travail est réalisée à partir des paramètres de disposition absolue des objets de référence du sous-ensemble de travail et des paramètres de disposition relative des objets du sous-ensemble de travail.

**6.** Procédé selon l'une quelconque des revendications 1 à 5, dans lequel, les objets dont le paramètre de disposition absolue est connu étant appelés objets de référence, les objets du sous-ensemble de travail et les objets extérieurs au sous-ensemble de travail entre lesquels de nouveaux paramètres de disposition relative sont déterminés, sont des objets de référence.

**7.** Procédé selon l'une quelconque des revendications 1 à 6, dans lequel la fiabilité associée à un nouveau paramètre de disposition relative entre un objet du sous-ensemble de travail et un objet extérieur au sous-ensemble de travail est déterminée selon une règle prédéterminée imposant qu'elle soit strictement inférieure à la moyenne des fiabilités des paramètres de disposition relative des objets du sous-ensemble de travail.

**8.** Procédé selon l'une quelconque des revendications 1 à 7, dans lequel le paramètre de disposition relative entre deux objets est la distance entre ces deux objets, et dans lequel le paramètre de disposition absolue d'un objet est la position de cet objet par rapport à une référence.

**9.** Procédé selon l'une quelconque des revendications 1 à 7, dans lequel le paramètre de disposition relative entre deux objets est l'orientation relative entre ces deux objets, et dans lequel le paramètre de disposition absolue d'un objet est l'orientation absolue de cet objet par rapport à une référence.

**10.** Procédé selon les revendications 4 et 9, dans lequel la boucle d'étapes (212*) comporte en outre :

- la détermination (242) d'un vecteur propre d'une matrice regroupant les orientations relatives des objets du sous-ensemble de travail, toutes les composantes du vecteur propre étant unitaires,
- la détermination (244) de l'orientation absolue de chaque objet du sous-ensemble de travail, à partir du vecteur propre et de l'orientation absolue d'un objet de référence du sous-ensemble de travail.

**11.** Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé (206 ; 240) de détermination de paramètres de disposition absolue d'objets selon l'une quelconque des revendications 1 à 10, lorsque ledit programme est exécuté sur un ordinateur.

**12.** Installation de contrôle (102), comportant :

- un ensemble de capteurs (C1, C2, C3, C4, C5, C6), chaque capteur étant conçu pour déterminer un paramètre de disposition relative par rapport à au moins un autre capteur de l'ensemble, et pour transmettre ce paramètre,
- un dispositif de traitement (106) conçu pour recevoir les paramètres transmis par les capteurs et pour mettre en oeuvre un procédé (206 ; *, 240) de détermination de paramètres de disposition absolue des capteurs selon l'une quelconque des revendications 1 à 10.

## Claims

**1.** Method for determining absolute layout parameters of objects on the basis of relative layout parameters provided by sensors, implemented by a processing device (106), comprising the following steps:

- the obtaining (210; 210*) of relative layout parameters, each between two objects of a set of objects, wherein the relative layout parameters have been determined and transmitted to the processing device (106) by said sensors,
- the association (211; 211*), with each relative layout parameter received, of a value, called reliability of the relative layout parameter,

**characterised in that** it further comprises the following loop of steps (212; 212*), executed at least once:

> - the selection (214; 214*) of a sub-set of objects, called working sub-set, as a function of the reliabilities of the relative layout parameters of the objects of the set,
> - the determination (230; 230*) of new relative layout parameters, each between an object belonging to the working sub-set and an object external to the working sub-set,
> - the association (232; 232*), with each new determined relative layout parameter, of a reliability calculated from the reliabilities of the relative layout parameters of the objects of the working sub-set,

and the following step:

> - the supply (231) of absolute layout parameters, each of an object of the set, said parameters being obtained from the new determined relative layout parameters.

2. Method according to claim 1, wherein the selection (214) of the working sub-set comprises:

> - the determination (216; 216*) of several subsets, called possible working sub-sets, and the calculation, for each possible working sub-set, of a value, called reliability of said possible working sub-set, from the reliabilities of the relative layout parameters of the objects of said possible working sub-set, and
> - the selection (218; 218*), as working sub-set, of the possible working sub-set having the greatest reliability.

3. Method according to claim 1 or 2, wherein the loop of steps (212; 212*) moreover comprises the determination (220; 220*) of the absolute layout parameter of each object of the working sub-set.

4. Method according to any of claims 1 to 3, wherein the selection of the working sub-set is moreover carried out by imposing that all of the relative layout parameters of the objects of the working sub-set are known.

5. Method according to claims 3 and 4, wherein, the objects for which the absolute layout parameter is known being called reference objects, the determination (220; 220*) of the absolute layout parameter of each object of the working sub-set is carried out from absolute layout parameters of the reference objects of the working sub-set and from the relative layout parameters of the objects of the working sub-set.

6. Method according to any of claims 1 to 5, wherein, the objects for which the absolute layout parameter is known being called reference objects, the objects of the working sub-set and the objects external to the working sub-set between which new relative layout parameters are determined, are reference objects.

7. Method according to any of claims 1 to 6, wherein the reliability associated with a new relative layout parameter between an object of the working sub-set and an object external to the working sub-set is determined according to a predetermined rule imposing that it is strictly less than the average of the reliabilities of the relative layout parameters of the objects of the working sub-set.

8. Method according to any of claims 1 to 7, wherein the relative layout parameter between two objects is the distance between said two objects, and wherein the absolute layout parameter of an object is the position of said object compared to a reference.

9. Method according to any of claims 1 to 7, wherein the relative layout parameter between two objects is the relative orientation between said two objects, and wherein the absolute layout parameter of an object is the absolute orientation of said object compared to a reference.

10. Method according to claims 4 and 9, wherein the loop of steps (212*) moreover comprises:

> - the determination (242) of an eigenvector of a matrix grouping together the relative orientations of the objects of the working sub-set, all of the components of the eigenvector being unitary,
> - the determination (244) of the absolute orientation of each object of the working sub-set, from the eigenvector and the absolute orientation of a reference object of the working sub-set.

11. Computer programme downloadable from a communications network and/or recorded on a support readable by computer and/or executable by a processor, **characterised in that** it comprises instructions for the execution of steps of a method (206; 240) for determining absolute layout parameters of objects according to any of claims 1 to 10, when said programme is executed on a computer.

12. Control installation (102), comprising:

> - a set of sensors (C1, C2, C3, C4, C5, C6), each sensor being designed to determine a relative layout parameter in relation to at least one other sensor of the set, and to transmit said parameter,
- a processing device (106) designed to receive the parameters transmitted by the sensors and to implement a method (206; 240) for determining absolute layout parameters of the sensors according to any of claims 1 to 10.

## Patentansprüche

1. Verfahren zur Bestimmung der Parameter der absoluten Position von Gegenständen ausgehend von Parametern der relativen Position, die von Sensoren geliefert werden, eingeleitet durch eine Verarbeitungseinrichtung (106), mit folgenden Schritten:

   - Erhalt (210; 210*) der Parameter der relativen Position, jeweils zwischen zwei Gegenständen einer Gesamtmenge von Gegenständen, wobei die Parameter der relativen Position von den Sensoren erfasst und an die Verarbeitungseinrichtung (106) weitergeleitet werden,
   - Zuordnung (211; 211*) eines Wertes zu jedem Parameter der relativen Position, bezeichnet als Zuverlässigkeit des Parameters der relativen Position,

   dadurch gekennzeichnet, dass es außerdem folgende Ablaufschleife (212; 212*) umfasst, die mindestens einmal durchlaufen wird:

   - Auswahl (214; 214*) einer Teilmenge von Gegenständen, bezeichnet als Arbeits-Teilmenge, in Abhängigkeit von den Zuverlässigkeiten der Parameter der relativen Position der Gegenstände der Gesamtmenge,
   - Bestimmung (230; 230*) von neuen Parametern der relativen Position, jeweils zwischen einem zu der Arbeits-Teilmenge gehörendem Gegenstand und einem Gegenstand außerhalb der Arbeits-Teilmenge,
   - Zuordnung (232, 232*) einer auf der Grundlage der Zuverlässigkeiten der Parameter der relativen Position der Gegenstände der Arbeits-Teilmenge berechneten Zuverlässigkeit zu jedem neu bestimmten Parameter der relativen Position,

   sowie folgenden Schritt:

   - Lieferung (231) der Parameter der absoluten Position, jeweils für einen Gegenstand der Gesamtmenge, wobei diese Parameter auf der Grundlage der neu bestimmten Parameter der relativen Position erhalten werden.

2. Verfahren gemäß Anspruch 1, in dem die Auswahl (214) der Arbeits-Teilmenge Folgendes umfasst:

   - Bestimmung (216; 216*) von mehreren Teilmengen, die als mögliche Arbeits-Teilmengen bezeichnet werden, sowie die Berechnung eines Werts, der als Zuverlässigkeit dieser möglichen Arbeits-Teilmenge bezeichnet wird, für jede mögliche Arbeits-Teilmenge auf der Grundlage der Zuverlässigkeiten der Parameter der relativen Position der Gegenstände dieser möglichen Arbeits-Teilmenge, und
   - Auswahl (218; 218*) der möglichen Arbeits-Teilmenge mit der höchsten Zuverlässigkeit als Arbeits-Teilmenge.

3. Verfahren gemäß Anspruch 1 oder 2, in dem die Ablaufschleife (212; 212*) außerdem die Bestimmung (220; 220*) des Parameters der absoluten Position jeden Gegenstands der Arbeits-Teilmenge umfasst.

4. Verfahren gemäß einem der Ansprüche 1 bis 3, in dem die Auswahl der Arbeits-Teilmenge außerdem unter der Annahme durchgeführt wird, dass alle Parameter der relativen Position der Gegenstände der Arbeits-Teilmenge bekannt sind.

5. Verfahren gemäß den Ansprüchen 3 und 4, in dem die Gegenstände, deren Parameter der absoluten Position bekannt sind, als Referenzgegenstände bezeichnet werden und die Bestimmung (220; 220*) des Parameters der absoluten Position jeden Gegenstandes der Arbeits-Teilmenge auf der Grundlage der Parameter der absoluten Position der Referenzgegenstände der Arbeits-Teilmenge und der Parameter der relativen Position der Gegenstände der Arbeits-Teilmenge durchgeführt wird.

6. Verfahren gemäß einem der Ansprüche 1 bis 5, in dem, wenn die Gegenstände, deren Parameter der absoluten Position bekannt sind, als Referenzgegenstände bezeichnet werden, die Gegenstände der Arbeits-Teilmengen und die nicht in den Arbeitsteilmengen enthaltenen Gegenstände, zwischen denen die neuen Parameter der relativen Position bestimmt werden, Referenzgegenstände sind.

7. Verfahren gemäß einem der Ansprüche 1 bis 6, in dem die einem neuen Parameter der relativen Position zwischen einem Gegenstand der Arbeits-Teilmenge und einem Gegenstand, der nicht in der Arbeits-Teilmenge enthalten ist, zugeordnete Zuverlässigkeit nach einer vorher festgelegten Regel bestimmt wird, die zwingend vorgibt, dass sie kleiner als die mittlere Zuverlässigkeit der Parameter der relativen Position der Gegenstände der Arbeits-Teilmenge sein muss.

8. Verfahren gemäß einem der Ansprüche 1 bis 7, in dem der Parameter der relativen Position zwischen zwei Gegenständen der Abstand zwischen diesen beiden Gegenständen ist und in dem der Parameter der absoluten Position eines Gegenstands die Position dieses Gegenstands in Bezug zu einem Referenzgegenstand ist.

9. Verfahren gemäß einem der Ansprüche 1 bis 7, in dem der Parameter der relativen Position zwischen zwei Gegenständen die relative Orientierung zwischen diesen beiden Gegenständen ist und in dem der Parameter der absoluten Position eines Gegenstands die absolute Orientierung dieses Gegenstands in Bezug zu einem Referenzgegenstand ist.

10. Verfahren gemäß den Ansprüchen 4 und 9, in dem die Ablaufschleife (212*) außerdem umfasst:

- Bestimmung (242) eines Eigenvektors einer Matrix, die die relativen Orientierungen der Gegenstände der Arbeits-Teilmenge zusammenfasst, wobei alle Komponenten des Eigenvektors Einheitskomponenten sind,
- Bestimmung (244) der absoluten Orientierung jeden Gegenstands der Arbeits-Teilmenge auf der Basis des Eigenvektors und der absoluten Orientierung eines Referenzgegenstandes der Arbeits-Teilmenge.

11. Computerprogramm zum Upload aus einem Kommunikationsnetz und/oder aufgezeichnet auf einem computerlesbaren Datenträger und/oder ausführbar durch einen Prozessor, **gekennzeichnet dadurch, dass** es Anleitungen für die Durchführung der Schritte eines Verfahrens (206; 240) zur Bestimmung der Parameter der absoluten Position von Gegenständen gemäß einem der Ansprüche 1 bis 10 enthält, wenn das besagte Programm auf einem Computer ausgeführt wird.

12. Kontrollanlage (102), die Folgendes umfasst:

- eine Gesamtmenge von Sensoren (C1, C2, C2, C4, C5, C6), wobei jeder Sensor so ausgelegt ist, dass er einen Parameter der relativen Position in Bezug zu mindestens einem anderen Sensor der Gesamtmenge bestimmt und diesen Parameter überträgt,
- eine Verarbeitungseinrichtung (106), die so ausgelegt ist, dass sie die von den Sensoren übertragenen Parameter empfängt und ein Verfahren (206; 240) zur Bestimmung der Parameter der absoluten Position der Sensoren gemäß einem der Ansprüche 1 bis 10 einleitet.

*Figure 1*

*100*

*102*

*104*

*106*

*108*

C1 C2 C3 C4 C5 C6

*Figure 2*

*200*

202

204

*206*

208

210

211

214

216

218

220

222

224

226

228

*212*

230

232

231

*240*

208*

210*

211*

214*

216*

218*

220*

242

244

*212**

230*

232*

231*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2460406 A

**Littérature non-brevet citée dans la description**

- **NATHAN KRISLOCK ; HENRY WOLKOWICZ.** *Explicit Sensor Network Localization using Semidefinite Programming and Clique Réductions,* 12 Août 2009